# EUROPÄISCHE PATENTANMELDUNG

(11) **EP 1 331 703 A1**
(43) Veröffentlichungstag der Anmeldung: **30.07.2003**
(21) Anmeldenummer: 02025467.8
(22) Anmeldetag: 15.11.2002
(51) Int. Cl.: H01R 13/66, H01R 24/06, H01R 24/00, H02G 3/12

(54) **Datendose**

(30) Priorität: 24.01.2002 DE 10202857
(71) Anmelder: CobiNet Fernmelde u. Datennetzkomponenten GmbH, 68542 Heddesheim (DE)
(72) Erfinder: Krey, Cornelius, 69493 Hirschberg (DE)
(74) Vertreter: Maucher, Wolfgang, Dipl.-Ing.

(57) **Zusammenfassung**

Die Erfindung betrifft eine Datendose (1) für Hochfrequenznetze mit einem an Wand, Boden oder Decke montierbaren Dosenkörper (2), in dessen Doseninneren eine Leiterplatte (6) gehalten ist, die wenigstens eine Anschlussbuchse (4) sowie zumindest ein mit der Anschlussbuchse (4) elektrisch verbundenes Kabelader-Anschlußelement (7) trägt, an das wenigstens eine Kabelader (8) eines durch eine Durchstecköffnung des Dosenkörpers (2) in das Doseninnere geführten Datenkabels (9) elektrisch anschließbar ist, wobei die Datendose (1) mit einem Dosendeckel (3) verschließbar ist, der eine, wenigstens einer Anschlussbuchse (4) zugeordnete Buchsenöffnung hat. Für die erfindungsgemäße Datendose (1) ist kennzeichnend, dass das zumindest eine Kabelader-Anschlußelement (7) auf der in Gebrauchsstellung dem Doseninnenraum zugewandten Plattenseite der Leiterplatte (6) angeordnet ist. Bei der erfindungsgemäßen Datendose (1) kann das Datenkabel vergleichsweise rasch und mit geringem Aufwand im Doseninneren montiert werden (vgl. Fig. 5).

## Beschreibung

Die Erfindung betrifft eine Datendose für Hochfrequenznetze mit einem an Wand, Boden oder Decke montierbaren Dosenkörper, in dessen Doseninneren eine Leiterplatte gehalten ist, die wenigstens eine Anschlussbuchse sowie zumindest ein mit der Anschlussbuchse elektrisch verbundenes Kabelader-Anschlußelement trägt,an das wenigstens eine Kabelader eines durch eine Durchstecköffnung des Dosenkörpers in das Doseninnere geführten Datenkabels elektrisch anschließbar ist, wobei die Datendose mit einem Dosendeckel verschließbar ist, der eine, wenigstens einer Anschlussbuchse zugeordnete Buchsenöffnung hat.

Die in Gebäuden geführten Hochfrequenznetze weisen Datenkabel auf, bei denen die paarig geschirmten Kabel nochmals von einem Schirmgeflecht ummantelt sind. Diese geschirmten Datenkabel führen zu Datendosen, in die ein Datenstecker lösbar einsteckbar ist.

Bei den vorbekannten Datendosen besteht das Problem, dass das vergleichsweise starre Datenkabel durch eine Durchstecköffnung des Dosenkörpers in das Doseninnere geführt und dort mit einer Zugentlastung fixiert werden muß, um anschließend die einzelnen Kabeladern des Datenkabels an einem, auf einer Leiterplatte befindlichen Kabelader-Anschlußelement befestigen und kontaktieren zu können. Anschließend muß die Leiterplatte mit den darauf befindlichen Kabelader-Anschlußelementen und Anschlussbuchsen gedreht und so in den Doseninnenraum eingesetzt werden, dass der Dosenkörper mittels dem vorgesehenen Dosendeckel funktionsgerecht verschlossen werden kann. Dabei gestaltet sich das Zurechtdrehen des zwischen dem Dosenkörper und der Leiterplatte vorgesehenen Kabelabschnitts und das Unterbringen dieses starren Kabelabschnitts im Doseninnenraum aufwendig und zeitraubend.

Man hat auch bereits eine Datendose der eingangs erwähnten Art geschaffen, bei der das in einem der Eckbereiche des Dosenkörpers in den Doseninnenraum ragende und im Doseninneren mittels einer Zugentlastung festgeklemmte Datenkabel anschließend an einer Seite der Platine vorbei nach vorne geführt wird, wo sich auf der dem Dosendeckel zugewandten Plattenseite der Leiterplatte sowohl die Kabelader-Anschlußelemente als auch die weiterführenden Anschlussbuchsen befinden. Auch diese vorbekannte Datendose der eingangs erwähnten Art ist vergleichsweise schwer zu handhaben.

Es besteht daher insbesondere die Aufgabe, eine Datendose der eingangs erwähnten Art zu schaffen, bei der das Datenkabel vergleichsweise rasch und mit geringem Aufwand im Doseninneren montiert werden kann.

Die erfindungsgemäße Lösung dieser Aufgabe besteht bei der Datendose der eingangs erwähnten Art insbesondere darin, dass das zumindest eine Kabelader-Anschlußelement auf der in Gebrauchsstellung dem Doseninnenraum zugewandten Plattenseite der Leiterplatte angeordnet ist.

Bei der erfindungsgemäßen Datendose ist das zum Beschalten der im Doseninneren befindlichen Leiterplatte vorgesehene, zumindest eine Kabelader-Anschlußelement auf der in Gebrauchsstellung dem Doseninnenraum zugewandten Plattenseite der Leiterplatte angeordnet. Auf diese Weise kann der zwischen Durchstecköffnung der Datendose einerseits und der Leiterplatte andererseits liegende Kabelabschnitt vergleichsweise kurz gehalten werden, so dass die mit dem Drehen der Leiterplatte und Unterbringen des Kabelabschnitts im Doseninneren verbundenen Schwierigkeiten zumindest weitestgehend vermieden werden können. Da weder das Datenkabel noch seine Kabeladern an der Leiterplatte vorbei zu der dem Dosendeckel zugewandten Plattenvorderseite geführt werden muß, ist das Datenkabel im Doseninneren der erfindungsgemäßen Datendose rasch und mit geringem Aufwand zu fixieren und anzuschließen.

Der mit der Herstellung und der Beschaltung der erfindungsgemäßen Datendose verbundene Aufwand läßt sich noch zusätzlich reduzieren, wenn sowohl das zumindest eine Kabelader-Anschlußelement als auch die wenigstens eine Anschlussbuchse auf der dem Doseninnenraum zugewandten Plattenseite der Leiterplatte angeordnet ist.

Die einfache Handhabung der erfindungsgemäßen Datendose wird wesentlich begünstigt, wenn die Leiterplatte eine Drehachse trägt und wenn die Leiterplatte bei geöffnetem Dosenkörper um die im Dosenkörper gelagerte Drehachse zwischen der Gebrauchsstellung und einer zum Beschalten des zumindest einen Kabelader-Anschlußelementes vorgesehenen Beschaltungsstellung verschwenkbar ist. Bei dieser Ausführungsform von eigener schutzwürdiger Bedeutung kann die Leiterplatte zwischen der Gebrauchsstellung und einer Beschaltungsstellung verschwenkt werden, in welcher Beschaltungsstellung die Kabelader-Anschlußelemente bequem und frei zugänglich sind. Die Leiterplatte trägt dazu eine Drehachse, die im Dosenkörper schwenkbar gelagert ist.

Eine einfache, mit geringem Aufwand herstellbare und bequem handzuhabende Ausführungsform gemäß der Erfindung sieht vor, dass an zwei gegenüberliegenden Seiten der Leiterplatte zwei Plattenstege vorstehen, welche die Drehachse bilden und dass die Plattenstege jeweils in eine Lageröffnung des Dosenkörpers einführbar sind.

Um das Datenkabel im Doseninneren der erfindungsgemäßen Datendose mittels einer möglichst einfachen Zugentlastung fixieren zu können, ist es vorteilhaft, wenn der Dosenkörper wenigstens eine Durchstecköffnung zum Durchführen des Datenkabels in den Doseninnenraum hat und wenn der Dosenkörper vorzugsweise im Bereich einer Durchstecköffnung wenigstens einen Befestigungssteg zum Befestigen eines in das Doseninnere geführten Kabelendes des Datenkabels insbesondere mittels eines Kabelbinders oder einer Kabelabfangschelle aufweist.

An diesem Befestigungssteg läßt sich das Datenkabel beispielsweise auch mit einem bereits zu einer Schlaufe geformten Kabelbinder rasch und einfach befestigen, wenn der wenigstens eine Befestigungssteg ein freies und vorzugsweise verbreitertes Stegende hat.

Um auch im Bereich dieser Zugentlastung rasch und kostengünstig die erforderliche Abschirmung der Kabeladern erreichen zu können, ist es vorteilhaft, wenn der Dosenkörper und/oder der Dosendeckel elektrisch leitfähig sind und wenn zum Befestigen des Datenkabels an dem zumindest einen Befestigungssteg wenigstens ein zumindest oberflächlich elektrisch leitfähiger Kabelbinder vorgesehen ist.

Weitere Merkmale der Erfindung ergeben sich aus der folgenden Beschreibung eines erfindungsgemäßen Ausführungsbeispieles in Verbindung mit den Ansprüchen sowie der Zeichnung. Die einzelnen Merkmale können je für sich oder zu mehreren bei einer Ausführungsform gemäß der Erfindung verwirklicht sein.

Es zeigt:
- Fig. 1: eine Datendose in einer Vorderansicht, die zum Anschluß an ein Hochfrequenznetz zwei sichtseitige Anschlussbuchsen hat,
- Fig. 2: die Datendose aus Figur 1 in einer Seitenansicht,
- Fig. 3: eine, in den Doseninnenraum der Datendose einsetzbare und dort verschwenkbar gelagerte Leiterplatte, welche die Anschlussbuchsen und eine Vielzahl von Kabelader-Anschlußelementen trägt,
- Fig. 4: den von einem Dosendeckel befreiten Dosenkörper der in Figur 1 und 2 gezeigten Datendose und
- Fig. 5: die im Dosenkörper befindliche und dort in ihrer Beschaltungsstellung verschwenkte Leiterplatte aus Figur 3.

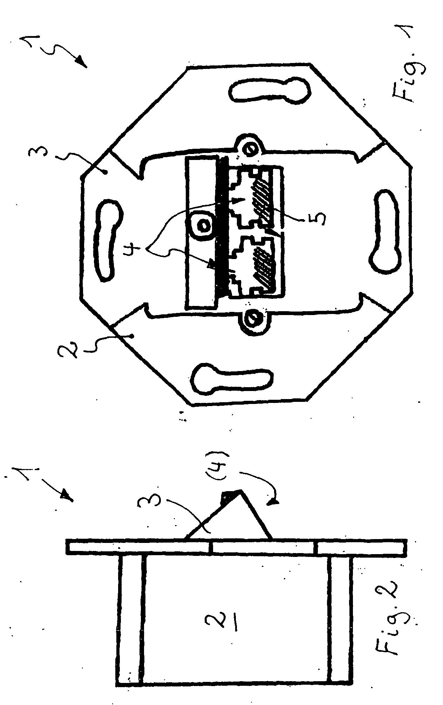

In den Figuren 1 und 2 ist eine Datendose 1 für Hochfrequenznetze gezeigt. Die Datendose 1 hat einen in Figur 4 noch näher dargestellten Dosenkörper 2, der hier als Unterputz-Dosenkörper an der Wand, dem Boden oder der Decke eines Gebäudes zu befestigen ist. Die Datendose 1 ist mit einem Dosendeckel 3 verschließbar, der eine den Anschlussbuchsen 4 zugeordnete Buchsenöffnung 5 hat.

Aus einem Vergleich der Figuren 1, 2 und 5 wird deutlich, dass im Doseninneren der Datendose 1 eine Leiterplatte 6 gehalten ist, die neben den Anschlussbuchsen 4 auch eine Vielzahl, mit den Anschlussbuchsen 4 elektrisch verbundener Kabelader-Anschlußelemente 7 trägt. An diese Kabelader-Anschlußelemente 7 sind die Kabeladern 8 eines Datenkabels 9 elektrisch anschließbar, welches Datenkabel 9 durch eine Durchstecköffnung des Dosenkörpers 2 in das Doseninnere geführt ist.

Das Datenkabel 9 ist Bestandteil des im Inneren eines Gebäudes geführten Hochfrequenznetzes. Das Datenkabel 9 weist paarig geschirmte Kabeladern 8 auf, die nochmals, von einem Schirmgeflecht 10 ummantelt sind. In die mit dem Datenkabel 9 verbundenen Anschlussbuchsen 4 der Datendose 1 ist jeweils ein, hier nicht weiter dargestellter Datenstecker lösbar einsteckbar.

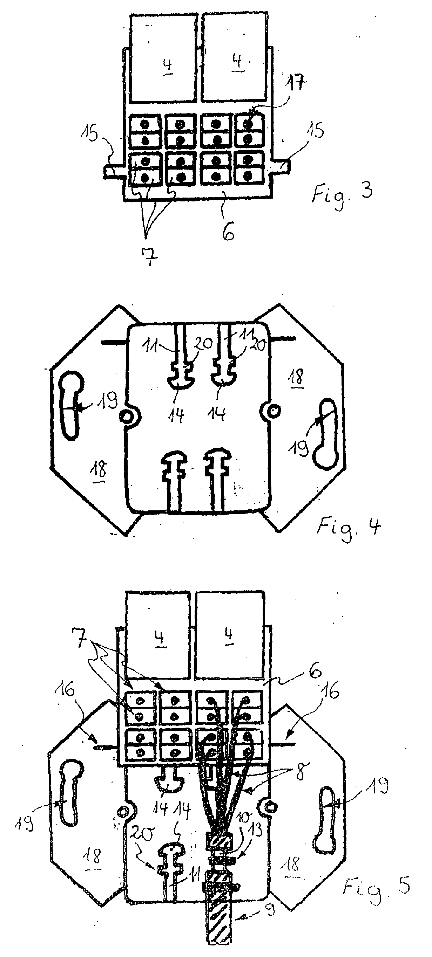

In Figur 5 ist erkennbar, dass der Dosenkörper 2 im Dosierinneren im Bereich der Durchstecköffnungen jeweils einen Befestigungssteg 11 hat. An dem Befestigungssteg 11 kann das in das Doseninnere geführte Kabelende des Datenkabels 9 mittels Kabelbindern 12, 13 befestigt werden. Die Befestigungsstege 11 haben dazu ein freies und verbreitertes Stegende 14, über das auch die bereits zu einer das Datenkabel 9 umgreifenden Schlaufe geformten Kabelbinder 12, 13 geschoben werden können.

Während ein der Durchstecköffnung zugewandter Kabelbinder 12 an der äußeren Isolationsschicht des Datenkabels 9 angreift, liegt ein zumindest oberflächlich elektrischer leitfähiger Kabelbinder 13 am abisolierten Schirmgeflecht 10 des Datenkabels 9 derart an, dass dieses Schirmgeflecht 10 mit dem elektrisch leitfähigen Dosenkörper 2 kontaktiert ist. Aus Figur 5 wird deutlich, dass die Klemmbereiche der Kabelbinder 12, 13 durch einen etwa mittigen Quersteg 20 des Befestigungssteges 11 voneinander getrennt sind.

Um den Kabelbinder 13 oberflächlich elektrisch leitfähig auszugestalten, kann dieser in seiner Längserstreckung von einem Schirmgeflecht umflochten sein.

Die Leiterplatte 6 trägt eine Drehachse, die durch zwei, an gegenüberliegenden Seiten der Leiterplatte 6 vorstehende Plattenstege 15 gebildet ist. Diese Plattenstege 15 sind in öffnungsseitig schlitzförmige Lageröffnungen 16 des Dosenkörpers 2 einsetzbar. Die Leiterplatte 6 läßt sich mit ihren in den Lageröffnungen 16 befindlichen und die Drehachse bildenden Stegen 15 zwischen der in Figur 2 gezeigten Gebrauchsstellung und der in Figur 5 dargestellten Beschaltungsstellung verschwenken. In dieser Beschaltungsstellung sind die auf der in Gebrauchsstellung dem Doseninneren zugewandten Plattenseite angeordneten Kabelader-Anschlußelemente 7 rasch und bequem zugänglich. Zum Beschalten kann die Leiterplatte 6 auch aus den Lageröffnungen 16 des Dosenkörpers entnommen und außerhalb des Dosenkörpers 2 angeordnet werden.

Da die Kabelader-Anschlußelemente 7 auf der dem Dosendeckel 3 abgewandten Seite der Leiterplatte 6 angeordnet sind, kann der zwischen der Durchstecköffnung der Datendose 1 und der Leiterplatte 6 andererseits liegende Kabelabschnitt vergleichsweise kurz gehalten werden, so dass die mit dem Drehen der Leiterplatte 6 und Unterbringen des Kabelabschnitts im Doseninneren verbundenen Schwierigkeiten zumindest weitestgehend vermieden werden können. Da weder das Datenkabel 9 noch seine Kabeladern 8 an der Leiterplatte 6 vorbei zu der dem Dosendeckel 3 zugewandten Plattenvorderseite geführt werden muß, ist das Datenkabel 9 im Doseninneren der hier gezeigten Datendose 1 rasch und mit geringem Aufwand zu fixieren und anzuschließen.

Die Kabelader-Anschlußelemente 7 sind hier als Kabelader-Steckkontakte ausgestaltet, in deren am freien Stirnende vorgesehene Einstecköffnungen 17 das freigelegte und abisolierte Kabelader-Ende einzuführen ist.

Nachdem das Datenkabel 9 im Doseninneren mit Hilfe der Kabelbinder 12, 13 fixiert wurde und nachdem die Leiterplatte 6 an ihren Kabelader-Anschlußelementen 7 mit den Kabeladern 8 beschaltet wurde, wird die Leiterplatte 6 von ihrer Beschaltungsstellung in ihre schräggestellte Gebrauchsstellung verschwenkt, in welcher die Anschlussbuchsen 4 öffnungsseitig zu einer Dosenaußenseite hin schräg nach außen weisen. Um die Abschirmung der Datendose 1 zu bewerkstelligen, wird anschließend der zur Datendose 1 gehörende Dosendeckel 3 aufgesetzt und verschraubt, der - ebenso wie der Dosenkörper 2 - an gegenüberliegenden Seiten seitlich nach außen vorstehende Montageflansche 18 mit bajonettverschlussartigen Befestigungsöffnungen 19 aufweist.

Bei der hier gezeigten Datendose 1 kann das Datenkabel 9 vergleichsweise rasch und mit geringem Aufwand im Doseninneren montiert werden.

## Patentansprüche

1. Datendose (1) für Hochfrequenznetze mit einem an Wand, Boden oder Decke montierbaren Dosenkörper (2), in dessen Doseninneren eine Leiterplatte (6) gehalten ist, die wenigstens eine Anschlussbuchse (4) sowie zumindest ein mit der Anschlussbuchse (4) elektrisch verbundenes Kabelader-Anschlußelement (7) trägt, an das wenigstens eine Kabelader (8) eines durch eine Durchstecköffnung des Dosenkörpers (2) in das Doseninnere geführten Datenkabels (9) elektrisch anschließbar ist, wobei die Datendose (1) mit einem Dosendeckel (3) verschließbar ist, der eine, wenigstens einer Anschlussbuchse (4) zugeordnete Buchsenöffnung (5) hat, **dadurch gekennzeichnet, dass** das zumindest eine Kabelader-Anschlußelement (7) auf der in Gebrauchsstellung den Doseninnenraum zugewandten Plattenseite der Leiterplatte (7) angeordnet ist.

2. Datendose nach Anspruch 1, **dadurch gekennzeichnet, dass** sowohl das zumindest eine Kabelader-Anschlußelement (7) als auch die wenigstens eine Anschlussbuchse (4) auf der dem Doseninnenraum zugewandten Plattenseite der Leiterplatte (7) angeordnet ist.

3. Datendose nach Anspruch 1 oder 2, **dadurch gekennzeichnet, dass** das zumindest eine Kabelader-Anschlußelement (7) als Kabelader-Steckkontakt ausgestaltet ist.

4. Datendose nach einem der Ansprüche 1 bis 3, **dadurch gekennzeichnet, dass** die Leiterplatte (6) eine Drehachse trägt, und dass die Leiterplatte (6) bei geöffnetem Dosenkörper (2) um die im Dosenkörper (2) gelagerte Drehachse zwischen der Gebrauchsstellung und einer zum Beschalten des zumindest einen Kabelader-Anschlußelementes (7) vorgesehenen Beschaltungsstellung verschwenkbar ist.

5. Datendose nach einem der Ansprüche 1 bis 4, **dadurch gekennzeichnet, dass** an zwei gegenüberliegenden Seiten der Leiterplatte (6) zwei Plattenstege (15) vorstehen, welche die Drehachse bilden und dass die Plattenstege (15) jeweils in eine Lageröffnung (16) des Dosenkörpers (2) einführbar sind.

6. Datendose nach einem der Ansprüche 1 bis 5, **dadurch gekennzeichnet, dass** der Dosenkörper (2) wenigstens eine Durchstecköffnung zum Durchführen des Datenkabels (9) in den Doseninnenraum hat und dass der Dosenkörper (2) vorzugsweise im Bereich einer Durchstecköffnung wenigstens einen Befestigungssteg (11) zum Befestigen eines in das Doseninnere geführten Kabelendes des Datenkabels (9), insbesondere mittels zumindest eines Kabelbinders (12, 13) oder einer Kabelabfangschelle, aufweist.

7. Datendose nach einem der Ansprüche 1 bis 6, **dadurch gekennzeichnet, dass** der wenigstens eine Befestigungssteg (11) ein freies und vorzugsweise verbreitertes Stegende (12) hat.

8. Datendose nach einem der Ansprüche 1 bis 7, **dadurch gekennzeichnet, dass** der Dosenkörper (2) und/oder der Dosendeckel (3) elektrisch leitfähig sind und dass zum Befestigen des Datenkabels (9) an dem zumindest einen Befestigungssteg (11) wenigstens ein zumindest oberflächlich elektrisch leitfähiger Kabelbinder (13) vorgesehen ist.
